# EUROPEAN PATENT SPECIFICATION

(11) **EP 2 850 368 B1**
(45) Date of publication and mention of the grant of the patent: **03.07.2019**
(21) Application number: 12733786.3
(22) Date of filing: 11.05.2012
(51) Int. Cl.: F24D 10/00, E04C 2/52

(54) **DISTRICT HEATING CENTER**
FERNWÄRMEZENTRALE
CENTRE DE CHAUFFAGE URBAIN

(43) Date of publication of application: 25.03.2015
(73) Proprietor: Gebwell Oy, 79100 Leppävirta (FI)
(72) Inventor: HULKKONEN, Timo, FI-79100 Leppävirta (FI)
(74) Representative: Berggren Oy, Tampere
(86) International application number: PCT/FI2012/050460
(87) International publication number: WO 2013/167792

(56) References cited:
- EP-A2- 2 012 067
- DE-A1- 4 405 737
- FR-A- 1 539 706
- FR-A1- 2 496 857

## Description

### Field of the invention

The invention relates to district heating center.

### Background of the invention

At present, house-specific district heating centers are usually located in a central heating distribution room within the building. When the existing heating system of a building is renovated, and a change from, for example, direct electric heating to district heating is implemented, this generally requires a suitable space within the building for placing the heat distribution center when utilizing the existing district heating systems. However, for example, in a building originally designed for electric heating, such a space does not necessarily exist, in which case it must be created by possibly utilizing the storage or living space of the building, and sometimes even by building a separate building outside the main building for the heat distribution center.

On the other hand, the entire operating environment of district heating is changing as well, since the heat demand of new construction decreases when existing buildings are renovated and the climate warms. In other words, the total energy consumption of areas will decrease in the future. As a result of this, the size of district heating connections decreases, and the building expenses of new district heating areas in relation to the energy consumption of the area increase when utilizing conventional heat distribution methods. The builder of new buildings pays for these additional expenses as connection fees. In addition, an increase in building expenses caused by, inter alia, stricter heat emission requirements has further increased these expenses, because currently placing a heat distribution center requires a heat distribution room inside a building.

A known district heating center is described in a patent application publication DE 4405737. A known district heating center is described also in publication FR1539706. This publication FR1539706 discloses a district heating center according to the preamble of claim 1.

A purpose of the invention is to provide a district heating center, by means of which the the heat losses from the pipes of the machine unit, the pumps and heat exchangers are reduced, as well as by means of the freezing of the apparatus if there is a break in the district heating delivery during the winter is prevented simply and effectively.

### Brief summary of the invention

The district heating center according to the invention solves the above-identified problems, because its machine unit is located outside the building, in one or more protective modules placed outside the building to be heated and which is/are made of plastic, metal or composite insulated by an insulator layer on its/their outer or inner surface and that insulator layer is a polyurethane foam layer injected or molded onto the outer or inner surface of the bottom and side wall of the protective module; or an insulation layer with outer damp proofing layer, such as, for example, a plastic or metal cover or a bituminous mass layer. More precisely, the district heating center according to the invention is characterized in what will be presented in the characterizing part of claim 1. The dependent claims will present some preferred embodiments of the district heating center according to the invention.

An advantage of the district heating center according to the invention is that in an existing building, where district heating is installed afterwards, it is not necessary to use storage or room space, or a separate new space for creating a heat distribution room. Further, in a new building valuable heated building area is not used for a heat distribution room required by district heating centers.

It is to be noted that a protective module in this application refers to a primarily uniform, hollow piece formed of bottom, at least one side wall and a cover sealed together tightly, which piece is assembled from factory-built elements or which is one uniform piece, which is installed outside the building to be heated in such a manner that its bottom and at least a part of the side walls are underground (i.e. installed, for example, in a hole created in the ground). A building built of bricks or e.g. boards in a conventional manner so that its bottom and at least a part of the side walls remain underground is not considered a protective module. A protective module may therefore comprise, e.g. a separate bottom, side walls and cover, which are connected to each other when installing the protective module into a hole in the ground, or a solution where a part of the side walls are already attached to the bottom before the other parts are installed, or where one or more walls of a protective module composed of a separate bottom, side walls and cover are formed of two or more parts being attached together.

In an advantageous embodiment of the district heating center according to the invention the district heating center also comprises an energy accumulator. The district heating connection is tailored for the simultaneous maximum capacity of tap water and heating. Especially in single-family houses the part of tap water of the connection capacity is significant. Typically water is consumed with high capacity for short periods of time. The energy consumption peaks of different buildings in a district heating area are often relatively simultaneous. Thus, the existing district heating centers and district heating network must be tailored for much higher capacity that the average capacity needed, even though the time periods requiring said capacity are quite short. Thanks to the energy accumulator, instead of a real-time high capacity, district heating energy may alternatively be stored with smaller capacity for a longer period of time. From the energy stored in the energy accumulator it is also possible to discharge energy occasionally with a higher capacity than the one it was produced with. For example, storing tap water energy makes it possible to use connection capacity that is lower than the conventional district heating solution. Smaller connection capacity in turn creates savings in building a district heating network. The stored tap water energy also evens out the energy consumption of the entire district heating network, thus providing savings in energy production. Energy storage makes it possible to combine building-specific heat production solutions with district heating. Building-specific heat sources may include, for example, solar heating and waste heat from different processes. In the future, it will be possible for the district heating customers of energy companies to transfer excess heat created in a building to the networks of energy companies. This way the short-term storage of heat in the energy accumulator of a heat distribution center improves the flexibility of a district heating system.

### Description of the drawings

In the following, the invention will be described in more detail with reference to the appended drawings, in which
Fig. 1 shows a principle drawing of a single-family house, where the heating system includes a district heating center according to the invention,
Fig. 2 shows the underground protective module of the district heating center in a single-family house according to fig. 1,
Fig. 3 shows one possible connection diagram of a machine unit and an energy accumulator placed inside the protective module of the preceding figures, and
Fig. 4 shows another district heating center according to the invention, where the parts are placed partly underground.

### Detailed description of the invention

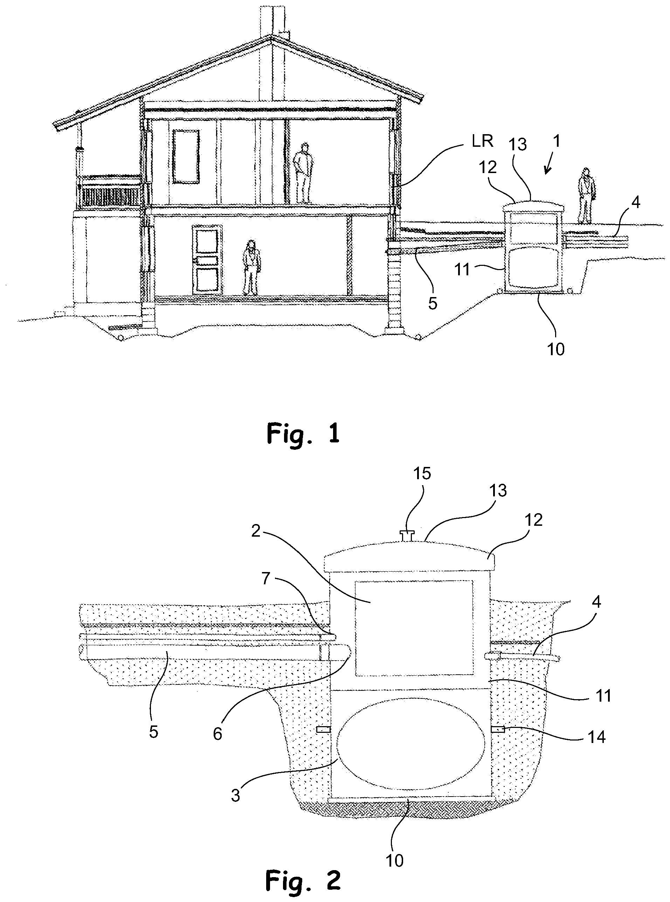

Figure 1 shows a single-family house, where the heating system comprises a district heating center according to the invention. It comprises in an underground protective module 1 outside the building being heated LR a machine unit 2, an energy accumulator 3 and a district heat medium circuit 4 connected to it from a district heating plant and at least one heating medium circuit 5 connected from it to the building to be heated. As can be seen in Figure 1, the protective module 1 is sunk underground outside the building, within a suitable distance from the building. The heating medium circuit 5 connected to the building from the energy accumulator 3 placed inside the protective module 1 comprises a thermally insulated heating pipes, which are connected to the rest of the heating system of the building in a manner known as such. The walls of the protective module comprise the necessary openings 6 and holes 7, through which the pipes and electric cables of the district heating medium circuit 4 and heating medium circuit 5 placed underground are directed inside the protective module 1. The connection points of these openings 6 and holes 7 are made tight in such a manner that the rain water absorbed to the ground and/or for example moisture from thaw water cannot get inside the protective module from between the wall and the pipes. This may be implemented, for example, by a sealing ring between the pipes and the wall of the protective module or by a suitable sealing compound.

Figure 2 shows the protective module 1 of figure 1 when it is placed underground. In this embodiment the protective module 1 is shaped like a cylindrical container closed from both ends and sunk into the ground vertically. The protective module 1 thus comprises a bottom 10, a side wall 11 and a cover 12. These may be manufacture, for example, of metal, plastic, composite, reinforced plastic, or some other suitable material. In the protective module 1 the bottom 10, the side wall 11 and the cover 12 may be one piece (for example, molded from plastic). The protective module 1 may also be created in such a manner that it comprises two parts, where the bottom 10 and the side wall 11 (or a part of it) form a first part and the cover 12 (or the cover and the rest of the side wall 11) another part, which are attached to each other when the protective module is sunk underground. All the walls of the protective module 1 are thermally insulated by, for example, a polyurethane foam layer injected or molded onto the outer or inner surface of the wall. The outer thermal insulation layer may, if necessary, be coated by a suitable outer dampproofing layer, such as, for example, a plastic or metal cover or a bituminous mass layer. The purpose of thermal insulation is, inter alia, to minimize heat losses from the pipes of the machine unit 2, the pumps and heat exchangers, as well as to prevent the freezing of the apparatus if there is a break in the district heating delivery during the winter.

The cover 12 located above the ground comprises a service hatch 13 that can be opened, through which the machine unit 2 and/or the energy accumulator 3 of the district heating apparatus can be installed inside the protective module 1 and through which the operation of the machine unit 2 and the energy accumulator 3 can be monitored and the necessary adjustments can be made in the set-up of the machine unit 2. For this purpose, in the embodiment according to figure 2, inter alia, the control unit of the machine unit 2 and the operating switches of the circulation pumps are placed at a distance of 0.5 meters at the most from the opening of the service hatch 13 so that they can be easily reached via the service hatch 13 without having to enter the protective module. The control unit may be located alternatively or additionally (for example, partly) inside the building being heated or some other building.

In figure 2 the protective module 1 is sunk into the ground in such a manner that the cover 12 reaches a little (for example, approximately 20 ... 40 cm) above ground, which, inter alia, prevents rain water and thaw water in the spring from entering the protective module 1 via the service hatch 13. The protective modules 1 advantageously comprise an anchoring 14 arranged against buoyancy uplift of soil implemented by the shape of the side walls or, for example, with anchor members attached to the side walls, which remain under the filling soil in the end phase of assembling the protective module 1. The service hatch 13 is generally water tight, but it may comprise a valve 15 for air ventilation so that the protective module 1 is ventilated as necessary. The cover 12 may in its entirety form a service hatch 13 (as in figure 2) or the service hatch 13 may be a separate hatch hinged to an opening in the cover (smaller than the cover) or attached to it with bolts.

In the embodiment according to figure 2 the machine unit 2 of the district heating apparatus is typically placed above the energy accumulator 3, but when using this type of a protective module 1 there is also the possibility that the energy accumulator 3 may be above the machine unit 2 or the machine unit 2 and the energy accumulator 3 are next to each other or partly staggered. If the placing of the machine unit 2 and the energy accumulator 3 is such that maintenance cannot be implemented from outside the service hatch 13, the protective module 1 must be large enough for the serviceman to enter the protective module through the service hatch 13 to perform the necessary maintenance work, or the machine unit 2 and the energy accumulator 3 must be easily removable from inside the protective module so that if necessary, they can both be lifted out of the protective module 1 for maintenance and service. Thus, all pipe connections must also be easily removable or implemented by flexible pipes so that lifting the machines out of the protective module 1 is possible without removing pipe connections.

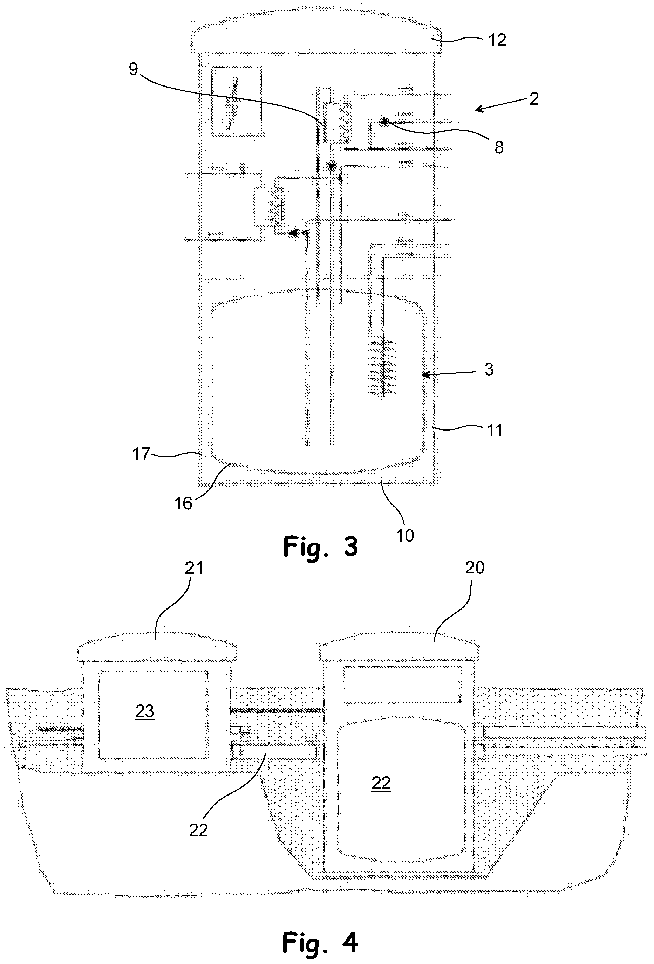

Figure 3 shows an example of how the heat exchangers 8 and pumps 9 of the machine unit 2 and the energy accumulator 3 are connected to each other and how the energy acquired by means of the district heating medium is charged in it to the energy accumulator 3. The medium (e.g. water or sometimes e.g. some non-freezing liquid, such as a mixture of water and glycol) of the heating medium circuit 5 is heated in the heat exchangers 8 by means of a district heating medium circulating in the district heating medium circuit 4. The heat energy stored in the energy accumulator 3 can be transferred from the energy accumulator 3 via the heat exchangers 8 to the heating medium circuits 5 or alternatively so that the medium inside the energy accumulator 3 functions as a heating medium, in which case it is directed directly to the heating system of the building being heated. Hot tap water can be produced from district heating by a plate heat exchanger, a water coil, a multi-part accumulator or by direct coupling. In addition to district heating, it is possible to charge outside energy as well in the energy accumulator 3, such as heat energy produced by a ground heat or air heat pump, solar accumulators or by means of a heat exchanger placed inside a fireplace, which heat energy is transferred to the energy accumulator by direct coupling, by a coil, by a multi-part accumulator, by a plate heat exchanger or by some other heat exchanger. Energy may be used directly from the energy accumulator 3 or via heat exchangers. The circulation pumps 9 for the medium in the system may be located inside or outside the protective module 1 (inside the building or in a separate protective module). The energy accumulator 3 is typically, for example, a container 16 of stainless steel, steel or plastic structure, and insulated from the outside by a suitable heat insulator 17 (e.g. a polyurethane insulator layer). Alternatively the energy accumulator 3 may be, for example, of aluminum, copper or some other suitable material or a combination of different materials, of which it is possible to provide a tight container with sufficient thermal and pressure endurance. In figure 3 the thermal insulation 17 of the container 16 is created by filling the areas between the outer surface of the container 16 and the bottom 10 and the side walls 11 of the protective module with polyurethane foam. Typically a layer at least as thick as this of the same thermal insulator 17 is also on top of the container 16.

Figure 4 shows another embodiment of the district heating center according to the invention. In the embodiment the machine unit 22 and the energy accumulator 23 are in separate protective modules 20 and 21, which are located outside the outer walls of the building being heated, within a distance from each other. The machine unit 22 is placed in the first protective module 20 and the energy accumulator 23 is placed in the second protective module 21. Both protective modules 20 and 21 are sunk to the ground in the manner shown in figure 4. The machine unit 22 in the first protective module 20 is connected to the energy accumulator 23 in the second protective module 21 for example in such a manner that a piping 24 is directed from the energy accumulator 23 to the primary side of the heat exchanger of the machine unit 22 placed in the protective module 20, in which piping the heating medium in the energy accumulator 23 and heated with the district heating medium is used as the heating medium of one or more heating medium circuits and for heating the tap water in the tap water circuit / as tap water. Alternatively the operation may also be arranged in such a manner that one or more heating medium circuits or water circuits are heated by a coil heat exchanger placed inside the energy accumulator, in which case no heat exchangers are needed in the machine unit 22 and the machine unit 22 thus comprises only the necessary pumps and control devices for controlling them.

In many respects, the district heating center according to the invention can be implemented in a way different from the above-described example embodiments. For example, the energy accumulator may in some embodiment be multi-part and it may be located entirely or partly inside the building being heated, in which case only the machine unit is placed in the protective module/modules. For example, in a single-family house or a vacation house being heated year round, the energy accumulator is typically of such a size that it can be easily placed, for example, under the sauna benches. In some embodiment, the removal of condensed water by means of sewage or an automatically starting pump may also be arranged in the underground protective module. The size, shape and number of protective modules of the district heating center according to the invention may vary in different embodiments of the invention. In some embodiment there may be even more than two protective modules. For example, if the district heating center operates as a district heating center for a block or an entire residential area. The protective module may be shaped low-laying and wide, or high and narrow, as necessary. For example, in the case of several buildings or, for example, a housing association composed of separate single-family houses, a heat exchanger and/or a machine unit may be placed in their own protective module close to each building. The shape of the protective modules being used for creating a district heating center may be selected, for example, according to the soil of the area (for example, the proximity of ground water or the quality of soil) so that sinking underground can be implemented as easily as possible and with low costs. When using a low-lying and wide protective module it is advantageous to place the machine unit and the energy accumulator next to each other, while when using a high and narrow protective module it is naturally better to place them on top of each other. In the case of a wide protective module there may be two or more service hatches next to each other or one after the other on the cover of the protective module in order to service different parts of the district heating center. Thus, the invention is not restricted to the example embodiments presented above, but it may vary within the scope of the appended claims.

## Claims

1. A district heating center, which comprises at least one protective module (1; 20, 21) and a machine unit (2; 22) located in the at least one protective module (1; 20, 21), a district heating medium circuit (4) connectable to the machine unit (2; 22) from a district heating plant and at least one heating medium circuit (5) connectable from the machine unit (2; 22) to a building being heated (LR), and in which district heating center at least the machine unit (2; 22) is placeable outside the outer walls of the building being heated (LR), in the least one protective module (1; 20, 21) for being at least partly underground, and wherein the at least one protective module (1; 20, 21) comprises a bottom (10) and at least one side wall (11), as well as a cover (12) equipped with a service hatch (13) that can be opened and closed, **characterized in that**
- all the walls of the at least one protective module (1; 20, 21) are thermally insulated on its outer or inner surface by a polyurethane foam layer injected or molded onto the outer or inner surface of the walls of the at least one protective module (1; 20, 21); and said polyurethane foam layer is coated by an outer damp proofing layer, such as, for example, a plastic or a metal cover or a bituminous mass layer.

2. The district heating center according to claim 1, **characterized in that** at least the bottom (10) and a part of the side walls (11) are formed of one, uniform piece.

3. The district heating center according to claim 1, **characterized in that** the at least one protective module is formed of a separate bottom (10), at least one side wall (11) and a top (12), which are connected to each other when placing the protective module (1; 20, 21) in the ground.

4. The district heating center according to claim 1, **characterized in that** at least a part of the at least one protective module (1; 20, 21) is of plastic, metal or composite.

5. The district heating center according to any of the claims 1 to 4, **characterized in that** in addition to the machine unit (2),an energy accumulator (3) for storing heat energy from the district heating medium has been placed inside the at least one protective module (1).

6. The district heating center according to claim 5, **characterized in that** the machine unit (22) is placed in a first protective module (20) and the energy accumulator (23) in a second protective module (21) separate from the protective module (20) of the machine unit (22).

7. The district heating center according to any of the claims 1 to 6, **characterized in that** the district heating center comprises an energy accumulator (3; 23) that is placeable outside the building being heated (LR).

8. The district heating center according to any of the claims 1 to 7, **characterized in that** the machine unit (2; 22) is placed inside the protective module (1; 20, 21) in such a way that at least the control switches of the circulation pumps for the heating medium are at a distance of less than 0.5 m from the service hatch (13) of the at least one protective module (1; 20, 21).

## Patentansprüche

1. Fernwärmezentrale, die mindestens ein Schutzmodul (1; 20, 21) und ein Maschinenaggregat (2; 22), das sich in dem mindestens einen Schutzmodul (1; 20, 21) befindet, einen Fernwärmemediumkreislauf (4), der sich mit dem Maschinenaggregat (2; 22) von einem Fernwärmewerk aus verbinden lässt, und mindestens einen Wärmemediumkreislauf (5) umfasst, der sich vom Maschinenaggregat (2; 22) aus mit einem beheizten Gebäude (LR) verbinden lässt, und wobei bei dieser Fernwärmezentrale sich mindestens das Maschinenaggregat (2; 22) außerhalb der Außenwände des beheizten Gebäudes (LR), im mindestens einen Schutzmodul (1; 20, 21), installieren lässt, um sich zumindest teilweise unterirdisch zu befinden, und wobei das mindestens eine Schutzmodul (1; 20, 21) einen Boden (10) und mindestens eine Seitenwand (11) sowie einen mit einer Wartungsluke (13), die sich öffnen und schließen lässt, ausgestatteten Deckel (12) umfasst, **dadurch gekennzeichnet, dass**
- alle Wände des mindestens einen Schutzmoduls (1; 20, 21) auf ihrer äußeren oder inneren Oberfläche durch eine Polyurethan-Schaumschicht, die auf die äußere oder innere Oberfläche der Wände des mindestens einen Schutzmoduls (1; 20, 21) gespritzt oder pressgeformt wurde, wärmegedämmt sind; und die Polyurethan-Schaumschicht durch eine äußere Feuchteisolierschicht, wie zum Beispiel eine Kunststoff- oder eine Metallverkleidung oder eine Schicht aus bituminöser Masse, beschichtet ist.

2. Fernwärmezentrale nach Anspruch 1, **dadurch gekennzeichnet, dass** mindestens der Boden (10) und ein Teil der Seitenwände (11) aus einem einheitlichen Stück ausgebildet sind.

3. Fernwärmezentrale nach Anspruch 1, **dadurch gekennzeichnet, dass** das mindestens eine Schutzmodul aus einem separaten Boden (10), mindestens einer Seitenwand (11) und einem Oberteil (12) gebildet wird, die bei der Installation des Schutzmoduls (1; 20, 21) im Erdboden miteinander verbunden werden.

4. Fernwärmezentrale nach Anspruch 1, **dadurch gekennzeichnet, dass** mindestens ein Teil des mindestens einen Schutzmoduls (1; 20, 21) aus Kunststoff, Metall oder Verbundwerkstoff besteht.

5. Fernwärmezentrale nach einem der Ansprüche 1 bis 4, **dadurch gekennzeichnet, dass** zusätzlich zum Maschinenaggregat (2), ein Energiespeicher (3) zum Speichern der vom Fernwärmemedium bereitgestellten Wärmeenergie im Innern des mindestens einen Schutzmoduls (1) installiert wurde.

6. Fernwärmezentrale nach Anspruch 5, **dadurch gekennzeichnet, dass** das Maschinenaggregat (22) in einem ersten Schutzmodul (20) installiert wird und der Energiespeicher (23) in einem zweiten Schutzmodul (21), getrennt vom Schutzmodul (20) des Maschinenaggregats (22), installiert wird.

7. Fernwärmezentrale nach einem der Ansprüche 1 bis 6, **dadurch gekennzeichnet, dass** die Fernwärmezentrale einen Energiespeicher (3; 23) umfasst, der sich außerhalb des beheizten Gebäudes (LR) installieren lässt.

8. Fernwärmezentrale nach einem der Ansprüche 1 bis 7, **dadurch gekennzeichnet, dass** das Maschinenaggregat (2; 22) im Innern des Schutzmoduls (1; 20, 21) so installiert ist, dass mindestens die Steuerschalter der Umwälzpumpen für das Wärmemedium sich in einer Entfernung von weniger als 0,5 m von der Wartungsluke (13) des mindestens einen Schutzmoduls (1; 20, 21) befinden.

## Revendications

1. Centre de chauffage de district, qui comprend au moins un module de protection (1 ; 20, 21) et une unité de machine (2 ; 22) située dans l'au moins un module de protection (1 ; 20, 21), un circuit de milieu de chauffage de district (4) pouvant être raccordé à l'unité de machine (2 ; 22) depuis une installation de chauffage de district et au moins un circuit de milieu de chauffage (5) pouvant être raccordé depuis l'unité de machine (2 ; 22) à un bâtiment chauffé (LR), et dans lequel centre de chauffage de district, au moins l'unité de machine (2 ; 22) peut être placée hors des murs extérieurs du bâtiment chauffé (LR), dans l'au moins un module de protection (1 ; 20, 21) afin d'être au moins enterrée de manière partielle, et dans lequel l'au moins un module de protection (1 ; 20, 21) comprend un fond (10) et au moins une paroi latérale (11), ainsi qu'un couvercle (12) équipé d'une trappe de service (13) qui peut être ouverte et fermée, **caractérisé en ce que**
- toutes les parois de l'au moins un module de protection (1 ; 20, 21) sont thermiquement isolées sur sa surface externe ou interne par une couche de mousse de polyuréthane injectée ou moulée sur la surface extérieure ou intérieure des parois de l'au moins un module de protection (1 ; 20, 21); et ladite couche de mousse de polyuréthane est revêtue par une couche extérieure étanche à l'humidité, comme par exemple, un couvercle en plastique ou en métal ou une couche de masse bitumineuse.

2. Centre de chauffage de district selon la revendication 1, **caractérisé en ce qu'**au moins le fond (10) et une partie des parois latérales (11) sont formés en une pièce uniforme.

3. Centre de chauffage de district selon la revendication 1, **caractérisé en ce qu'**au moins un module de protection est formé d'un fond séparé (10), d'au moins une paroi latérale (11) et d'une partie supérieure (12) qui sont raccordés l'un à l'autre lors de la mise en place du module de protection (1 ; 20, 21) dans le sol.

4. Centre de chauffage de district selon la revendication 1, **caractérisé en ce qu'**au moins une partie de l'au moins un module de protection (1 ; 20, 21) est en plastique, en métal ou en matériau composite.

5. Centre de chauffage de district selon l'une quelconque des revendications 1 à 4, **caractérisé en ce qu'**en plus de l'unité de la machine (2), un accumulateur d'énergie (3) permettant de stocker de l'énergie thermique provenant du milieu de chauffage de district a été placé à l'intérieur dudit au moins un module de protection (1).

6. Centre de chauffage de district selon la revendication 5, **caractérisé en ce que** l'unité de machine (22) est placée dans un premier module de protection (20) et l'accumulateur d'énergie (23) dans un second module de protection (21) séparé du module de protection (20) de l'unité de machine (22).

7. Centre de chauffage de district selon l'une quelconque des revendications 1 à 6, **caractérisé en ce que** le centre de chauffage de district comprend un accumulateur d'énergie (3 ; 23) qui peut être placé hors du bâtiment traité (LR).

8. Centre de chauffage de district selon l'une quelconque des revendications 1 à 7, **caractérisé en ce que** l'unité de chauffage (2 ; 22) est placée à l'intérieur du module de protection (1 ; 20, 21) de sorte qu'au moins les interrupteurs de commande des pompes de circulation pour le milieu de chauffage soient à une distance inférieure à 0,5 m de la trappe de service (13) de l'au moins un module de protection (1 ; 20, 21).
